# EUROPEAN PATENT SPECIFICATION

(11) **EP 3 294 485 B1**
(45) Date of publication and mention of the grant of the patent: **17.07.2019**
(21) Application number: 15794151.9
(22) Date of filing: 11.11.2015
(51) Int. Cl.: B23K 1/00, B23K 1/002, F16B 9/00, F16B 11/00, F16B 37/04

(54) **JOINING COMPONENT AND JOINING METHOD**
VERBINDUNGSKOMPONENTE UND VERBINDUNGSVERFAHREN
ÉLÉMENT D'ASSEMBLAGE ET PROCÉDÉ D'ASSEMBLAGE

(30) Priority: 11.05.2015 DE 102015107309
(43) Date of publication of application: 21.03.2018
(73) Proprietor: Newfrey LLC, New Britain, CT 06053 (US)
(72) Inventor: HAIN, Jochen, 35394 Giessen (DE); OPPER, Reinhold, 35394 Giessen (DE); GRAMSCH-KEMPKES, Sascha, 35394 Giessen (DE)
(74) Representative: SBD IPAdmin
(86) International application number: PCT/EP2015/076287
(87) International publication number: WO 2016/180505

(56) References cited:
- EP-A2- 0 811 667
- DE-A1-102006 044 377
- DE-A1-102012 021 210

## Description

The present invention relates to a joining component having a shank and a flange which extends transversely with respect thereto, wherein the flange comprises a top surface which faces away from the shank, by way of which the joining component is usually mounted on a workpiece.

In addition, the present invention relates to a joining method where the joining component according to the invention is mounted on a workpiece.

In the engineering field of joining joining components or fastening elements to workpieces, one known practice is to weld metal studs onto metal workpieces, for example. This method, which is known as "stud welding", is used especially in the automobile industry in order to weld studs to body panels, with fastening clips made of plastic subsequently being attached to the studs, and cables, lines etc. being fixed to said clips.

These types of studs are also used in the automobile industry as so-called ground studs and are welded onto the bodywork for the purposes of establishing electric contact for ground connections. Said ground studs, as a result, consist of electrically conducting material such as steel or aluminium.

A fundamental problem in the case of the above-mentioned joining method of stud welding is the input of heat, which is always relatively high, into the ground material which is necessary during the welding process in order to obtain a materially bonded connection. This appears to be a problem in particular against the background that more and more alternative materials are used, for example, in car body construction, which alternative materials can be damaged in case of a too high heat input.

In modern light-weight automobile construction, the use of higher-strength steel plates and flexible sandwich elements is to be seen increasingly. These allow for a reduction in the weight of the vehicle compared to conventional materials as a result of reducing the material thicknesses whilst retaining the mechanical characteristics. Examples of such materials are high-strength steel plates such as for example Usibor™ with wall thicknesses of less than 0.7 mm or Litecor®. Conventional welding on said components is no long economically possible as the thermal heat input results in damaging the polymer layer or in welding through the thin-walled component.

A further trend is the increasing proportion of fibre reinforced composites which are installed in the vehicle, are also only partially weldable and are insufficiently electrically conducting for ground connections.

As an alternative to the above-named stud welding, thermoplastically welding studs or other fastening elements produced from plastics material onto plastics material workpieces is known.

A further joining method frequently used with metal fastening elements is soldering. DE 10 2004 043 627 B4, for example, discloses a method for connecting a metal fastening element to a metal workpiece by means of soldering, the solder paste, which is arranged in a space between the workpiece and the fastening element, being fused and then the fastening element and the workpiece being moved toward one another such that the connection is created. An electric arc is realized between the workpiece and the fastening element for fusing the solder. However, the above-mentioned problem of a relatively high heat input into the workpiece exists here too. Apart from this, soldering is also only suitable for joining two metal components together.

Adhesively bonding joining components in the form of such studs onto workpieces is also known. Especially due to the fact that in motor vehicle body assembly non-metallic composite materials are increasingly being used, the adhesive bonding technique has been established as a fastening method in car body construction.

It is generally known in this case to apply an adhesive to a joining surface of a joining component, wherein the adhesive is usually applied in a heated state and then cooled again. The thus produced component with applied adhesive is then supposedly capable of being transported, e.g. from a production point to a location at which the joining component is to be adhesively bonded to the workpiece.

During the actual adhesive bonding process, the adhesive is then activated or reactivated, wherein the adhesive is usually heated again. The adhesives used for this are designed to crosslink within a relatively short time during the adhesive bonding process so that an adhesive bond can be realized within time intervals of less than 60 s, in particular less than 30 s, preferably less than 10 s.

In motor vehicle body assembly, a multiplicity of such joining components in the form of fastening elements are generally adhesively bonded to body sections. This is usually carried out by automated, robot-assisted adhesive bonding systems in which the joining components are fed automatically.

From document EP 0 741 842 B1 it is known to apply a hot-melt adhesive to the joining surface of a joining component, in which the joining component is lowered onto the surface of a hot-melt adhesive bath and raised again. After the cooling of the hot-melt adhesive, the joining components are then to be packable and transportable without there being the risk of these sticking together. Further bonding studs or methods for mounting these types of studs onto workpieces by means of adhesive bonding are known, for example, from EP 1 456 543 B1, DE 10 2009 042 467 A1 and from DE 10 2012 021 210 A1, from which there is known a joining component having a shank and a flange which extends transversely with respect to the shank, wherein the flange comprises a top surface which faces away from the shank, wherein a region of the top surface is covered by a pre-applied adhesive.

Although adhesive bonding is asserting itself more and more in many applications in the automobile industry as the joining method of choice, the adhesive bonding processes known up to now are not suitable, however, for mounting above-mentioned ground studs which are mounted for establishing electrical contact for ground connections on the vehicle body. The adhesive layers created are normally electrically insulated. At any event, the electric resistance emerging from such an adhesive layer is usually too high in order to be able to ensure sufficiently acceptable provision of the electrical contact necessary for a ground stud.

Given this background, it is an object of the invention to provide an improved joining component which avoids at least one of the above-described disadvantages. In this case, it is particularly an object to provide a joining component which can be mounted onto workpieces, in particular non-metal workpieces, in a relatively simple manner and with comparatively little energy consumed and, at the same time, nevertheless be suitable as an electric ground connection. It is also an object of the present invention to provide a corresponding joining method.

This object is achieved according to the invention by means of a joining component of the type referred to in the introductory portion, wherein a first region of the top surface of the flange which faces away from the shank is covered by a pre-applied soldering material and a second region of the top surface of the flange is covered by a pre-applied adhesive.

The above object is additionally achieved by a joining method with the following steps: 1.) providing a joining component with a shank and a flange which extends transversely thereto, the flange comprising a top surface which faces away from the shank, a first region of the top surface being covered by a pre-applied soldering material and a second region of the top surface being covered with a pre-applied adhesive; 2.) providing a workpiece with at least one electrically conducting region; positioning the joining component on the workpiece in such a manner that the soldering material contacts the electrically conducting region; and 3.) joining the joining component onto the workpiece as a result of heating the adhesive, wherein the soldering material is fused at the same time to produce an electrically conducting connection between the joining component and the workpiece.

The present invention is concerned consequently with a combination of the two joining methods of adhesive bonding and soldering. An adhesive is also pre-applied for this purpose on the joining component according to the invention on the top surface of the flange in addition to a soldering material. "Pre-applied" soldering material or adhesive is to be understood in the present case as a soldering material or adhesive which has been applied beforehand on the joining component and is held thereon in a substantially positionally accurate and captive manner. This is preferably, therefore, a fusable soldering material or a fusable adhesive which, in the raw state of the joining component, is not liquid or pasty but is highly viscous and tack-free in such a manner that the pre-applied adhesive remains on the fastening element in a positionally accurate manner whilst said fastening element is preferably transported as bulk goods. The "raw state of the joining component" is to be understood in the present case as the state of the joining component in which it is usually distributed, that is the state of the joining component before it is mounted onto the workpiece.

For example, the pre-applied adhesive is a highly viscous adhesive that is not fully chemically cured and is fully hardenable and chemically curable during the joining process by means of heat treatment, for example as a result of inductive heating. A thermoplastic plastics material or so-called hot melt can also be used. An adhesive is to be understood in the present case in general as a structural adhesive according to DIN EN923, that is adhesives of all types which can transfer average and higher loads. According to the above-mentioned DEN EN923, an adhesive is defined as "non-metal material which can connect joining component as a result of surface adhesion and inside strength (cohesion)" (see also DIN 8593, sub-point 4.8).

The pre-applied soldering material can be, for example, a cooled soldering material which has been pre-applied on the top surface of the flange of the joining component and is (once again) liquefiable, i.e. (re-) activatable as a result of heating. The soldering material can generally also be designated in short as "solder".

As a result of the above-mentioned combination of pre-applied soldering material and pre-applied adhesive, the joining components can be mounted onto a workpiece by means of heat treatment. During heating of the joining component, both the adhesive and the solder are liquefied. Where a chemically cured adhesive is used, the hardening is accelerated or initiated by the heating process. During a subsequent cooling process, the soldering material solidifies. When a hot melt is used as a pre-applied adhesive, the cohesion strength is generated with the solder as a result of simultaneous solidification.

When the joining component is heated as a whole unit, it can also be advantageous when the point on the workpiece, onto which the joining component is to be bonded or soldered, is preheated. This can occur, for example, by means of a lamp, fan or also inductively and can contribute to a shortening of the cycle time and an increase in quality when the solder joint is produced. It is also possible to heat the soldering material and the adhesive purely in a local manner.

It must be pointed out that the fixed or load-bearing connection between the joining component and the workpiece, which is to be produced during the joining process, is brought about in the present case in particular by the adhesive, whereas the solder joint created is used exclusively, or at least predominantly, for producing an electrically conductive connection between the joining component and the workpiece. The solder joint created by the pre-applied soldering material during the joining process must consequently not necessarily result in a fixed or load-bearing connection between the joining component and the workpiece as said function is brought about by the curing of the adhesive. Nevertheless, it is obvious that the solder joint nevertheless provides a contribution to the overall strength of the joint in practice.

The above-mentioned combination of simultaneous soldering and adhesive bonding consequently enables the use of the joining component as a ground connection, such types of ground connections also being possible on non-metal workpieces on account of the adhesive bonding, insofar as in the case of such a workpiece at least one electrically conducting region is provided which the joining component can contact with the first region of the top surface of the flange that is covered with soldering material.

Essentially, as a result of the joining component according to the invention, on the flange top surface of which both soldering material and adhesive is pre-applied, two different functions are achieved at the same time: 1.) Fixed connection as a result of adhesive and 2.) Electric contact as a result of the soldering material. Both the soldering material and the adhesive are nevertheless activatable in one and the same joining process by means of heat. The energy consumption necessary for activating the adhesive and soldering material is relatively small compared to conventional welding. The heating of the adhesive and of the soldering material necessary during the joining process can be generated, for example, by inductive heating. In principle, it is also conceivable to bring the soldering material and the adhesive to processing temperature by means of arcs, that is in a similar manner as is described in DE 10 2004 043 627 B4 just for soldering.

Along with the possibility of mounting such types of joining components onto non-metal workpieces, the combination of adhesive bonding and soldering also enables totally new types of ground connections, for example in the form of a bonding/soldering stud injected around with plastics material as a pipeline clip with contact region, etc.

According to a preferred embodiment, the joining component is realized as a stud, wherein the shank extends along a central axis and the flange extends perpendicular with respect to the central axis.

The flange is preferably a round, plate-shaped flange. In principle, however, angular flanges or other flanges that are formed in a different manner are also possible. A stud of this type is preferably a rotationally symmetrical component which is symmetrical with respect to the central axis, along which the shank of the stud extends.

The flange is usually mounted by way of its top surface on the workpiece. The shank then projects perpendicularly upwards from the workpiece. When it is used as a ground stud, the current can then be diverted via the stud into the workpiece by means of a cable lug, which is fastenable on the shank of the stud. The cable lug, by means of which the electric line is connected to the stud, is usually fixed on the stud together with a nut or a protective cap produced from plastics materials. According to a preferred embodiment, a thread is consequently arranged on or in the shank.

According to an alternative embodiment, an insulation displacement connector is arranged on the shank. By means of such an insulation displacement connector, an electric line can also be connected to the stud mechanically and so as to be electrically conducting in a very simple manner.

According to a preferred embodiment, the first region of the flange top surface, which is covered by the pre-applied soldering material, adjoins the second region of the flange top surface which is covered by the pre-applied adhesive.

Both regions are therefore preferably separated from one another. In this case, it is particularly preferred for at least part of the soldering material not to be covered by the adhesive (when viewed parallel to the central axis). It is particularly preferred for the soldering material not to be covered entirely with adhesive in the raw state of the joining component, but just to adjoin the adhesive at the side, that is transversely with respect to the central axis or in the radial direction of the joining component. The advantage of this in particular is that the adhesive does not impair the electrically conducting contact between the joining component and the workpiece which is created by the soldering material.

According to a further embodiment, it is provided that the soldering material protrudes higher than the adhesive from the top surface of the flange.

According to said embodiment, the thickness of the layer of the soldering material is therefore greater than the thickness of the adhesive in the raw state of the joining component, the thickness being understood as the dimension of the adhesive layer or soldering material layer perpendicular to the top surface of the flange of the joining component. Such an embodiment also improves the electrical contact between the joining component and the workpiece as the risk of the electrically non-conductive or slightly conducting adhesive passing between the soldering material and the workpiece is reduced as a result.

According to a further embodiment, the second region of the flange top surface, which is covered by the pre-applied adhesive, at least partly surrounds the first region of the flange top surface which is covered by the pre-applied soldering material. According to said embodiment, it is preferred in particular for the second region to surround the first region completely.

The soldering material, according to said embodiment, is preferably arranged in the centre of the flange top surface. The adhesive is preferably applied in a ring-shaped manner around the soldering material on the flange top surface. The advantage of this in particular is that the solder contact point created between the joining component and the workpiece is sealed by the surrounding adhesive such that no corrosion produced by moisture can be generated there.

According to a further embodiment, it is provided that the second region surrounds the first region completely, the second region being separated by or at a spacing from the first region by means of a ring-shaped gap.

Both materials are able to expand in the radial direction during the bonding-soldering process as a result of such an annular gap between the solder and the adhesive.

According to a further embodiment, an annular groove is admitted into the top surface of the flange of the joining component, the annular groove forming at least part of the second region and being covered by the adhesive.

Said annular groove serves as protection against unintended removal of the pre-applied adhesive from the joining component.

According to an alternative embodiment, the first region of the flange top surface which is covered with the pre-applied soldering material at least partly surrounds the second region of the flange top surface which is covered with the pre-applied adhesive. According to said embodiment, it is preferred in particular for the first region to surround the second region completely.

The adhesive is then preferably arranged as a type of adhesive lens in the centre of the flange top surface. The soldering material is preferably arranged in a ring-shaped manner around the adhesive lens as a type of solder ring. Said type of embodiment of the joining component is simpler to produce from a production viewpoint compared to the above-mentioned reverse arrangement of the first and second region. In addition, said embodiment provides the advantage of the solder contact point being able to be developed in a relatively large manner.

According to a further embodiment, the top surface of the flange comprises a recess, the recess forming at least part of the first region which is covered by the soldering material.

A recess of this type in the top surface of the flange provides the advantage, as a result, in particular of the pre-applied soldering material being protected against falling out. For example, the soldering material can be inserted mechanically beforehand into the recess and secured against falling out, for example as a result of embossing. The adhesive can then be applied around the soldering material (first variant) or between the soldering material in the centre thereof (second variant). In both cases, it is once again particularly preferred for the soldering material, when viewed along the central axis of the joining component, not to be covered by the adhesive and preferably to protrude upwards relative to the adhesive so that the generating of the electrically conducting connection between the joining component and the workpiece is ensured. However, in the soldered state the recess also serves, along with protecting against falling out, for improving the current transmission over the lateral surface of the flange top surface. A greater (electrical) contact surface can be created between the workpiece and the joining component as a result of the recess than is the case as a result of a single solder point which is applied onto a flat surface without recess.

It is also conceivable for the adhesive to be rolled initially and then to be punched out in the form of adhesive rings. One of several such adhesive rings can then be set onto the flange top surface of the joining component such that the adhesive ring or rings surrounds or surround the soldering material located centrally on the flange top surface. As a result of deforming the soldering material during an embossing operation downstream, the adhesive ring or rings is or are fixed additionally on the joining component in a mechanical manner. In said variant, the above-mentioned recess, in which the soldering material is admitted, is preferably arranged in the centre of the top surface of the flange.

It is generally preferred for the soldering material used to have a melting temperature which is lower or equal to the curing temperature of the adhesive used.

In this way, the above-mentioned combined soldering and adhesive bonding can be realized in one and the same process operation. The bonding and soldering operation can be effected similarly as in the case of the adhesive bonding of studs. The joining component and the workpiece are heated. The joining component is then placed onto the workpiece, before or during the liquefaction of the adhesive and the soldering material. As a result of supplying more heat, the soldering material and the adhesive fuse. In this case, the soldering material cures the workpiece in the solder zone which forms the electrical contact between the joining component and the workpiece. At the same time, the adhesive cures the remaining region of the flange top surface of the joining component. The soldering material solidifies as a result of the subsequent cooling. In the case of a chemically hardening system, the adhesive cures during the heating phase or solidifies at the same time as the solder when using a thermoplastic plastics material or hot melt. The adhesive then takes care of the mechanical strength of the connection between the joining component and the workpiece. The soldering material takes care of the electrically conducting connection between the joining component and the workpiece.

According to a embodiment, it is preferred for the melting temperature of the soldering material to be within a range of between 100°C and 250°C, in a particularly preferred manner within the range of between 150°C and 220°C.

As a result, the process temperatures during the joining process can be kept relatively low. Excessive heat input into the workpiece, which could result in its destruction, are effectively prevented as a result.

The following soldering materials, for example, are possible for the use according to the invention: (a) S-Sn90Zn10 (melting temperature of approximately 200°C-250°C), (b) SnPb37 (melting temperature of approximately 180°C), (c) SnZn (+Bi) (melting temperature of approximately 190°C-200°C), (d) BI57Sn42Ag1% (melting temperature of approximately 138°C-140°C).

The following adhesive bonding materials, for example, are possible for the use according to the invention: all hot melts, in particular reactive hot melts on an epoxy resin base, and all PASA® adhesives ("Pre-Applicable Structural Adhesive", Fraunhofer-Institut for Production Engineering and Applied Material Research).

According to a further preferred embodiment, the soldering material is a lead-free soft solder which comprises a flux agent.

As a result, a sufficient technical soldering connection is generated. As the flux agent is already included in the soldering material, it no longer has to be applied externally. The advantage of this in particular is that an unintended application of flux agent onto the joining component outside the soldering region is avoided which otherwise would impair the specific adhesion of the adhesive considerably. As a result of the above-named embodiment, point-precise flux agent dosing in the soldering region is realized. The flux agent can also be applied onto the solder on the stud or can also be applied on the workpiece (e.g. by means of micro-dosing) prior to the bonding-soldering process.

It is obvious that the features mentioned above and the features yet to be mentioned below are usable not only in the combination specified in each case but also in other combinations or on their own without departing from the framework of the present invention.

Exemplary embodiments of the invention are shown in the drawings and are explained in more detail in the following description, in which:
- Fig. 1: shows a schematic longitudinal sectional view through a joining component according to a first embodiment of the invention;
- Fig. 2: shows a perspective schematic view of the joining component according to the first embodiment of the invention;
- Fig. 3: shows a schematic longitudinal sectional view through a joining component according to a second embodiment of the invention;
- Fig. 4: shows a schematic longitudinal sectional view through a joining component according to a third embodiment of the invention;
- Fig. 5: shows a schematic longitudinal sectional view through a joining component according to a fourth embodiment of the invention;
- Fig. 6: shows a longitudinal sectional view of the joining component according to the second embodiment of the invention, once it has been fastened on a workpiece: and
- Fig. 7: shows a schematic longitudinal sectional view of a joining component according to a fifth embodiment of the invention, once it has been fastened on a workpiece.

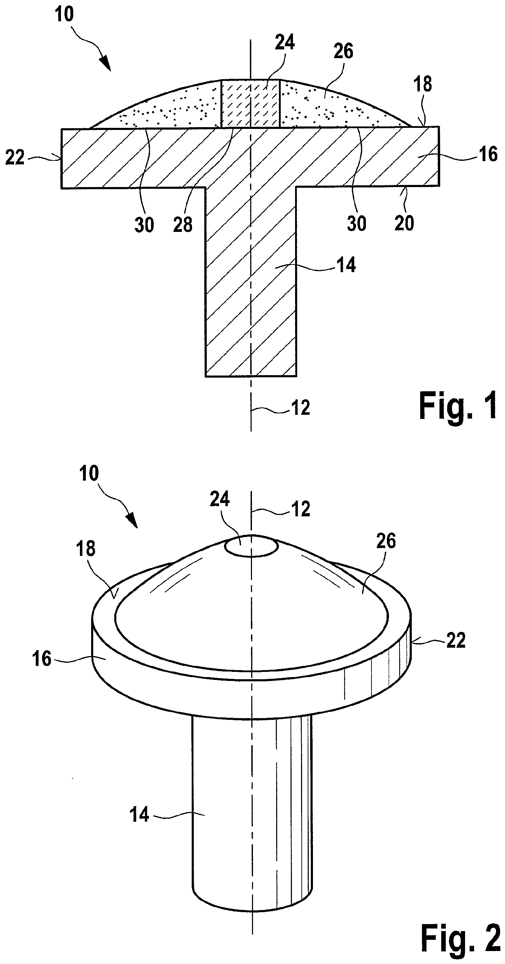

Fig. 1 shows a schematic longitudinal section of a first embodiment of a joining component. The joining component is designated therein in its entirety by way of the numeral reference 10.

According to the embodiment shown in Fig. 1, the joining component 10 is realized as a stud. The joining component 10 can, however, other than as shown in the Figures, also be realized as a blind hole stud or weld nut without departing from the framework of the present invention.

The joining component 10 is preferably developed symmetrically or at least substantially symmetrically. It comprises a shank 14 which extends along a central axis 12. Said shank 14 is frequently also designated as an anchor portion as it can serve for fastening or anchoring other components. The term "shank" is to be understood in a wide sense in the present case.

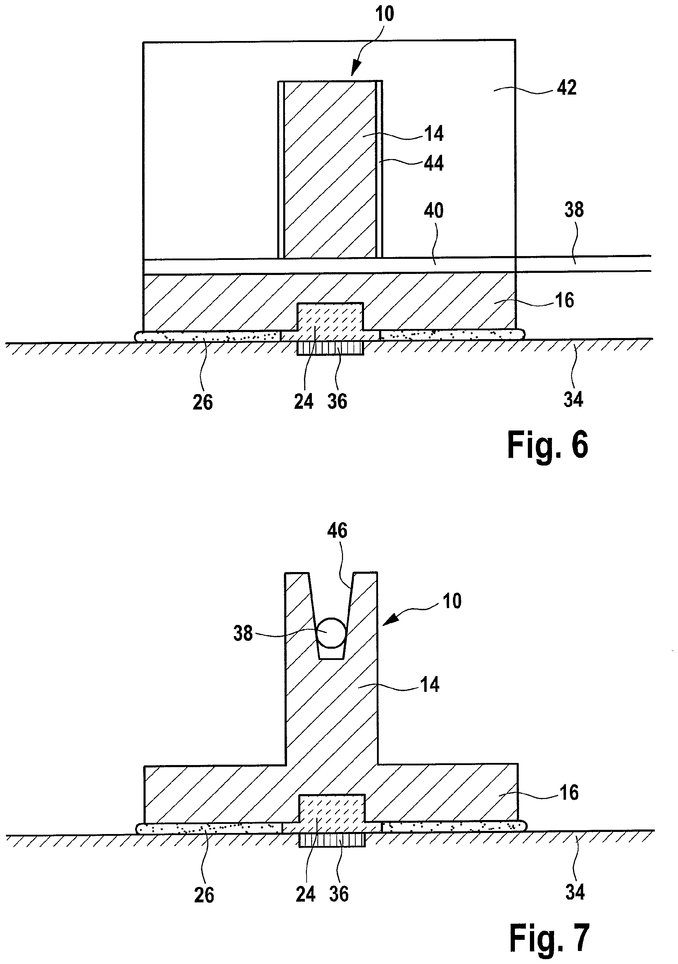

When used in vehicle body construction, electric lines are frequently fastened to the shank 14. In such cases, the stud 10 serves as an electrical ground connection. In principle, an external thread can also be applied on the shank 14 (see for example Fig. 6).

Transversely with respect to the shank 14 or transversely with respect to the central axis 12, the stud 10 comprises a flange 16. The flange 16 preferably extends perpendicularly or orthogonally to the shank 14 and to the central axis 12. The stud 10 is usually mounted or fastened on the workpiece by means of said flange 16. This occurs in the present case, as explained in detail below, as a result of a combination of bonding and soldering. The flange 16 is developed in particular in a plate-shaped or cylindrical manner. It extends substantially about the central axis 12 in the radial direction.

The joining component 10 is usually mounted on the workpiece by way of a top surface 18 of the flange 16. According to the first embodiment, said top surface 18 of the flange 16 is developed as a planar, circular surface. Said surface is frequently also designated as the joining surface. As, however, it is not necessarily compulsory to have a planar surface, in the present case reference is made in a general manner to the top surface 18 of the flange 16, by means of which the joining component 10 is mounted on the workpiece.

The named top surface 18 of the flange 16 designates the side of the flange 16 which faces away from the shank 14. The top surface 18 lies opposite a bottom surface 20 of the flange 16. Said bottom surface 20 preferably extends parallel to the top surface 18. The shank 14, which is usually developed in a cylindrical manner, extends proceeding from the bottom surface 20 of the flange 16 and from there protrudes from the flange 16.

Finally, the flange 16 comprises another circumferential surface 22 which extends transversely with respect to the top surface 18 and to the bottom surface 20. Said circumferential surface 22 is developed in the present case as a cylindrical surface which extends parallel to the central axis 12 of the stud 10. Instead of a cylindrical circumferential surface, however, an inconstant, polygonal circumferential surface 22, which is assembled from several part surfaces, is also conceivable.

As can be seen in addition from Figs. 1 and 2, the top surface 18 of the flange 16 is at least partly covered by a soldering material 24 and an adhesive 26. A first region 28 of the top surface 18 of the flange 16 is covered by the soldering material 24. A second region 30 of the top surface 18 of the flange 16 is covered by the adhesive 26. The first and second regions 28, 30 are different from one another. They do not intersect one another, but rather preferably adjoin one another. First and second regions 28, 30 are to be understood in the present case as part regions or part surfaces of the top surface 18 of the flange 16.

According to the first embodiment of the joining component 10 according to the invention shown in Figs. 1 and 2, the first region 28 is arranged in the centre of the top surface 18 of the flange 16. The second region 30 at least partly surrounds the first region 28, preferably however totally. The consequence of this is that, according to the first embodiment, the adhesive 26 applied on the second region 30 surrounds the soldering material 24 arranged in the first region 28 in the radial direction.

The soldering material 24 and the adhesive 26 are, however, separated from one another in such a manner that, when viewed parallel to the central axis 12 of the joining component 10, they do not cover one another. The first region 28 of the top surface 18 of the flange 16 is therefore preferably covered simply by soldering material 24. The second region 30 of the top surface 18 of the flange 16 is preferably covered simply by adhesive 26. According to the first embodiment, the first region 28 of the top surface 18 forms a circular surface and the second region 30 forms a circular ring surface which is arranged radially further on the outside.

Both soldering material 24 and adhesive 26 are pre-applied onto the top surface 18 of the flange 16, that is already applied on the joining component 10 beforehand and held in a substantially positionally correct and captive manner thereon. During the production of the joining component 10, soldering material 24 and adhesive 26 are preferably applied in the heated and liquid stated onto the top surface 18 of the flange and thereafter are cooled in order to solidify. Soldering material 24 and adhesive 26 are at least partially solidified in the raw state of the joining component, that is after its production but before its mounting on the workpiece. As a result of another heat treatment, the soldering material 24 and the adhesive 26 can be liquefied again when the joining component 10 is mounted on a workpiece.

In particular the adhesive 26 should be developed such that it is only fully cured and consequently its full holding force developed during or after the joining process. The soldering material 24 and the adhesive 26, however, should also be solid or highly viscous even in the raw state of the joining component 10 in such a manner that the joining component 10 in the raw state can be transported as bulk goods without the soldering and adhesive layers being removed in an unwanted manner.

On account of the combined equipping of the joining component 10 with soldering material 24 and adhesive 26, the joining component 10 according to the invention is suitable for a combination of the two joining methods of adhesive bonding and soldering. As has already been mentioned, a plurality of new possibilities open up as a result. As a result, the joining component 10 is also able to be mounted namely as a ground stud on non-metal, thermally sensitive materials.

During the joining of the joining component 10 on a workpiece, soldering material 24 and adhesive 26 are preferably heated at the same time. This can be effected, for example, as a result of inductive heating. Other types of heating, however, are also possible. In order to ensure simultaneous liquefaction of the soldering material 24 and the adhesive 26, it is preferred for the melting temperature of the soldering material 24 to be established within a similar temperature range as the curing temperature of the adhesive 26. The adhesive 26 usually limits the process temperature upwards, whereas the soldering material 26 limits the process temperature downwards. It is consequently in particular preferred for the melting temperature of the soldering material 24 to be lower or equal to the curing temperature of the adhesive 26. A soldering material 24 with a melting temperature within the range of between 100°C and 250°C, preferably within the range of between 150°C and 220°C, should consequently preferably be selected. The curing temperature of the adhesive 26 should be established correspondingly within a similar temperature range.

In principle, the two functions which have the soldering material 24 to be pre-applied onto the joining component 10 and the adhesive 26 to be pre-applied onto the joining component 10 are to be differentiated between. In contrast to the adhesive 26, the soldering material 24 serves namely less or not at all for the mechanical connection between the joining component 10 and the workpiece, by way of which the joining component 10 is to be joined. The soldering material 24 serves substantially for producing an electrically conducting contact between the joining component 10 and the workpiece. The adhesive 26, in contrast, is to produce a mechanically solid, load-bearing connection between the joining component 10 and the workpiece such that the connection produced during the joining process between the joining component 10 and the workpiece withstands tensile forces and torque.

The adhesive 26, in other words, is to ensure a stable connection between the workpiece and the joining component 10 joined thereon which also enables a certain load transmission. The bond strength of the joint is therefore generated by the adhesive. The solder joint created, in contrast, has the task of diverting the current from an electric line, which can be connected to the joining component 10 or its shank 14, via the flange 16 into the workpiece.

In order to enable sufficient technical connection, the soldering material 24 preferably comprises a flux agent portion. The applying of the flux agent onto the joining component 10 outside the soldering region (first region 28) would impair the specific adhesion of the adhesive 26 in a considerable manner. Consequently, as an alternative to a soldering material 24 which contains flux agent, just flux agent dosing in a point-precise manner in the soldering region (first region 28) is conceivable.

In order to ensure as good an electrically conductive solder joint as possible, it is particularly preferred over and above this for the soldering material 24, when viewed parallel to the central axis 12, not to be covered by adhesive 26. In order to be able to avoid this type of covering even during the joining process, it is particularly preferred for the soldering material layer 24 applied on the top surface 18 of the flange 16 to be dimensioned, when measured parallel to the central axis 12, in a thicker manner than the adhesive layer 26 applied on the top surface 18 of the flange.

In general, the adhesive-soldering joining component 10 proposed here can be used both with electrically conducting metal components and with electrically non-conducting plastics material components. With electrically non-conducting plastics material components, metal or current-conducting regions which serve as conducting paths in the workpiece should be provided or integrated in the workpiece for current transmission. In such a case, the joining component 10 is positioned during the joining process in such a manner that the first region of the flange top surface provided with the soldering material 24 comes to rest on or above said conducting path. This will be explained in more detail below with reference to Figs. 6 and 7.

A further advantage of the first embodiment of the joining component according to the invention shown in Figs. 1 and 2 consists in that the adhesive layer 26 surrounds the soldering material layer 24. This results in a type of corrosion protection for the soldering material 24.

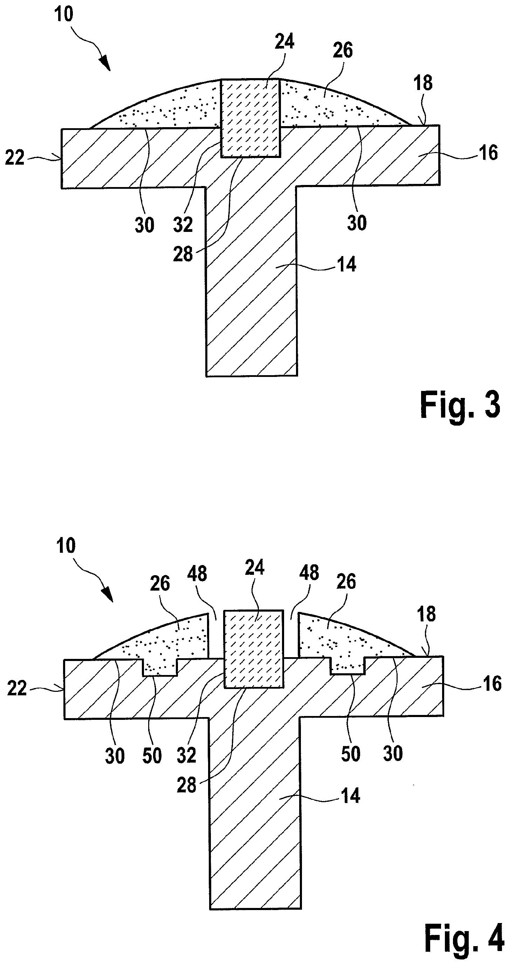

Fig. 3 shows a second embodiment of the joining component 10 according to the invention. The fundamental difference to the first embodiment consists in that a recess is admitted into the flange top surface 18. Said recessforms the first region 28 in which the soldering material 24 is admitted. As shown in the present case, the recess 32 can be developed in a cylindrical manner. In principle, however, it is also conceivable for the recess 32 to be formed in a conical or angular manner.

The recess 32 serves substantially as protection against the pre-applied soldering material 24 falling out or against unintended removal of the pre-applied soldering material 24 from the flange top surface 18. This is important in particular when the joining component 10 together with a plurality of other joining components of its type is transported as bulk goods. Along with the protection against falling out, however, the recess 32 serves, also in the soldered state, for improving the current transmission over the lateral surface of the flange top surface 18. As a result of the recess 32, a larger electrical contact surface can be created between the workpiece and the joining component 10 than is the case as a result of a single solder point which is applied onto a flat surface without any recess.

During the production, the soldering material 24 can be introduced into the recess 32, for example, as a result of embossing. The adhesive 26 can then be applied around the soldering material 24. In this embodiment also it is preferred for the soldering material 24 not to be covered, when viewed along the central axis 12, by the adhesive 26. Consequently, in this case too it protrudes parallel to the central axis 12 in relation to the adhesive layer 26.

However, in place of a solder application as a result of embossing, other types of mounting can possibly be used in general, for example as a result of soldering on a solder point (e.g. in the form of a solder lens, solder drop).

As a result of applying (pre-applying) the adhesive 26 onto the joining component 10 initially in liquid form, a type of convex, lens-shaped configuration of the adhesive layer 26 on the flange top surface 18 is produced. In general, however, it is also conceivable for the adhesive 26 to be rolled initially and then punched out in the form of adhesive rings. Said adhesive rings can then be placed onto the flange top surface 18 such that they surround the centrally arranged soldering material 24. As a result of deforming the soldering material 24 in an embossing operation downstream, the adhesive ring 26 can then be mechanically fixed on the joining component 10 in said production variant also.

Fig. 4 shows a third embodiment of the joining component 10 according to the invention. In contrast to the second embodiment shown in Fig. 3, a gap 48 is provided between the soldering material 24 and the adhesive 26 according to the third embodiment. The two materials 24, 26 pre-applied onto the top surface 18 of the flange 16 are therefore spaced apart from one another. The gap 48 is preferably realized as a ring-shaped gap 48. As a result of such an annular gap 48 between the solder 24 and the adhesive 26, both materials are able to expand in the radial direction during the described bonding-soldering process.

A further difference between the third embodiment (see Fig. 4) and the second embodiment (see Fig. 3) consists in that an annular groove 50, into which the adhesive 26 is introduced or which is covered by the adhesive 26, is admitted into the top surface 18 of the flange 16. Said annular groove 50 serves, similarly to the recess 32, as protection against unintended removal of the pre-applied adhesive 26 from the joining component 10.

It must be pointed out that the two last-explained features of the third embodiment (gap 48 and annular groove 50) are also usable independently of one another without departing from the framework of the present invention. Both features are also usable in principle independently of the recess 32 without departing from the framework of the present invention. They can therefore also be used individually or together with the joining component 10 according to the first embodiment shown in Figs. 1 and 2.

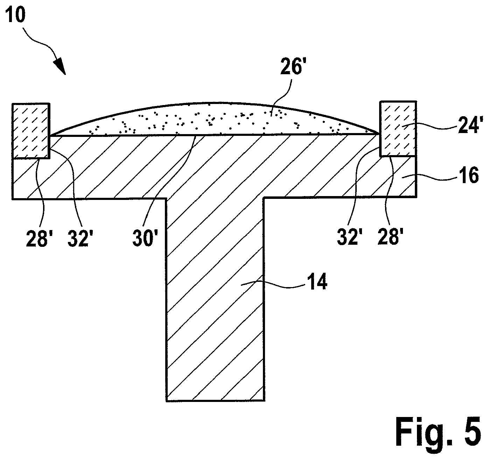

A further (fourth) embodiment of the joining component 10 is shown in a schematic longitudinal sectional view in Fig. 5. In contrast to the first two embodiments, the adhesive layer 26' according to said third embodiment is arranged in the centre of the flange top surface 18. The soldering material layer 24' surrounds the adhesive layer 26'. Accordingly, the so-called first and second regions 28' and 30' of the flange top surface 18 are changed-over in contrast to the first two embodiments. The first region 28', which is covered by the soldering material 24', surrounds the second region 30' which is covered by the adhesive 26'.

The first region 28' of the flange top surface 18, in a similar manner as according to the second embodiment, is realized as a recess. Said recess extends on the circumference side and forms here a type of circular ring-shaped recess32' which is introduced into the flange top surface 18. Nevertheless, it is also preferred here once again for the soldering material layer 24', when viewed parallel to the central axis 22, to protrude beyond the adhesive layer 26'. In the case of this type of arrangement (soldering material 24' on the outside and adhesive 26' on the inside), it is also conceivable, as in the first embodiment of the joining component 10, to develop the flange top surface 18 as a planar surface, that is without any recess32'.

Figs. 6 and 7 show a schematic sectional view of an example of use of the joining component 10 according to the invention. The joining component 10 is mounted on a workpiece 34 therein. The joining component 10 itself is developed according to the second embodiment (see Fig. 3).

The adhesive layer 26, as mentioned already, produces a mechanically load-bearing connection between the joining component 10 and the workpiece 34. The soldering material 24 serves for establishing the electrical contact. For this purpose, it is placed onto a conducting path 36 introduced in the workpiece 34 and is connected fixedly to said conducting path. The workpiece 34 can be, for example, a workpiece produced from a material which is not electrically conducting and into which a current-conducting, metal conducting path 36 is introduced or integrated.

The connection shown in Figs. 6 and 7 between the joining component 10 and the workpiece 34 can be produced, for example, in the following manner: the soldering material 24 and the adhesive 26 are initially heated. The joining component 10 is then placed or pressed onto the workpiece 34 by way of the flange top surface 18 before the soldering material 24 and the adhesive 26 are liquefied. As a result of further heat input, the soldering material 24 and the adhesive 26 are then made to fuse. In this case, the soldering material 24 cures the workpiece 34 in the soldering zone in which the conducting path 36 is arranged. At the same time, the adhesive 26 cures the surrounding region of the workpiece 34. During subsequent cooling the soldering material 24 solidifies. The adhesive 26 cures in an accelerated manner during the heating phase in the case of a chemically cured adhesive or solidifies during cooling in the case of a hot melt or thermoplastic plastics material.

The difference between the variants shown in Figs. 6 and 7 consists purely in the type of embodiment of the shank 14 of the joining component 10 as well as in the resultant possibility of connecting an electric line 38 to the joining component 10.

In Fig. 6, the electric line 38 is connected to the joining component 10 by means of a cable lug 40 which is placed onto the shaft 14. A housing 42 is used to fix the cable lug 40. Said housing 42 is screwed onto an external thread 44 which is provided on the outside surface of the shank 14. The housing 42 can be an insulating protective cap, for example, produced from plastics material. As an alternative to this, the housing 42 can also be realized as a cap nut. In addition, it is advantageous when the joining component 10 comprises a so-called hold and drive function (geometry for holding by means of positive locking, e.g. Torx, polygon or ellipse) so that the workpiece is not deformed when the cable lug 40 is screwed tight. This is in particular advantageous when the workpiece 34 is a thin-walled, easily deformable workpiece. Equally advantageous is the use of anti-twist protection integrated into the cable lug 40.

In the connection variant shown in Fig. 7, the electric line 38 is fixed by means of an insulation displacement connector 46 which is provided on the shank 14 of the joining component 10. Further alternative fixing possibilities for electric lines are equally conceivable, e.g. the use of plastic clips or pipe clips with a contact region, etc.

In summary, it can be established that the joining component 10 according to the invention provides the possibility of producing ground contacts even on thin, non-weldable plates. If conducting paths are worked into non-conducting materials, ground points can be created at arbitrary points by means of the joining component 10 according to the invention. If the workpiece 34, on which the joining component 10 according to the invention is mounted, consists of a non-conducting material (e.g. of CFK), the adhesive connection provides a simple and secure hold. The adhesive connection per se does not have to be current-conducting as this is realized by the solder joint.

## Claims

1. Joining component (10) having a shank (14) and a flange (16) which extends transversely with respect to the shank (14), wherein the flange (16) comprises a top surface (18) which faces away from the shank (14), wherein a first region (28, 28') of the top surface (18) is covered by a pre-applied soldering material (24, 24') and a second region (30, 30') of the top surface (18) is covered by a pre-applied adhesive (26, 26').

2. Joining component according to Claim 1, wherein the joining component (10) is a stud, wherein the shank (14) extends along a central axis (12) and the flange (16) extends perpendicular to the central axis (12).

3. Joining component according to Claim 1 or 2, wherein the first region (28, 28') adjoins the second region (30, 30').

4. Joining component according to one of Claims 1 to 3, wherein at least a part of the soldering material (24, 24') is not covered by the adhesive (26, 26').

5. Joining component according to one of Claims 1 to 4, wherein the soldering material (24, 24'), when viewed from the top surface (18) of the flange (16) along the central axis (12) of the joining component (10), protrudes higher than the adhesive (26, 26').

6. Joining component according to one of Claims 1 to 5, wherein the second region (30) at least partly surrounds the first region (28).

7. Joining component according to one of Claims 1 to 5, wherein the first region (28') at least partly surrounds the second region (30').

8. Joining component according to one of Claims 1 to 7, wherein the top surface (18) of the flange (16) comprises a recess (32, 32') and wherein the recess (32, 32') forms at least part of the first region (28, 28') which is covered by the soldering material (24, 24').

9. Joining component according to Claim 8, wherein the recess (32) is arranged in the center of the top surface (18) of the flange (16).

10. Joining component according to one of Claims 1 to 9, wherein the melting temperature of the soldering material (24, 24') is lower or equal to the curing temperature of the adhesive (26, 26').

11. Joining component according to one of Claims 1 to 10, wherein the melting temperature of the soldering material (24, 24') is within a range of between 100°C and 250°C, preferably within a range of between 150°C and 220°C.

12. Joining component according to one of Claims 1 to 11, wherein the soldering material (24, 24') is a lead-free soft solder which comprises a flux agent.

13. Joining component according to one of Claims 1 to 12, wherein a thread (44) is arranged on or in the shank (14).

14. Joining component according to one of Claims 1 to 13, wherein an insulation displacement connector (46) is arranged on the shank (14).

15. Joining method having the steps:
- providing a joining component (10) with a shank (14) and a flange (16) which extends transversely with respect to the shank (14), wherein the flange (16) comprises a top surface (18) which faces away from the shank (14), wherein a first region (28, 28') of the top surface (18) is covered by a pre-applied soldering material (24, 24') and a second region (30, 30') of the top surface (18) is covered by a pre-applied adhesive (26, 26');
- providing a workpiece (34) with at least one electrically conducting region (36);
- positioning the joining component (10) on the workpiece (34) in such a manner that the soldering material (24, 24') contacts the electrically conducting region (36); and
- joining the joining component (10) onto the workpiece (34) as a result of heating the adhesive (26, 26'), wherein the soldering material (24, 24') is fused at the same time to produce an electrically conducting connection between the joining component (10) and the workpiece (34).

## Patentansprüche

1. Fügebauteil (10) mit einem Schaft (14) und einem quer dazu verlaufenden Flansch (16), wobei der Flansch (16) eine von dem Schaft (14) abgewandte Oberseite (18) aufweist, wobei ein erster Bereich (28, 28') der Oberseite (18) mit einem vorapplizierten Lotmaterial (24, 24') bedeckt ist und ein zweiter Bereich (30, 30') der Oberseite (18) mit einem vorapplizierten Klebstoff (26, 26') bedeckt ist.

2. Fügebauteil nach Anspruch 1, wobei das Fügebauteil (10) ein Bolzen ist, wobei der Schaft (14) entlang einer Mittelachse (12) verlauft und der Flansch (16) senkrecht zu der Mittelachse (12) verläuft.

3. Fügebauteil nach Anspruch 1 oder 2, wobei der erste Bereich (28, 28') an den zweiten Bereich (30, 30') angrenzt.

4. Fügebauteil nach einem der Ansprüche 1 bis 3, wobei zumindest ein Teil des Lotmaterials (24, 24') nicht mit dem Klebstoff (26, 26') bedeckt ist.

5. Fügebauteil nach einem der Ansprüche 1 bis 4, wobei das Lotmaterial (24, 24') von der Oberseite (18) des Flansches (16) entlang der Mittelachse (12) des Fügebauteils (10) betrachtet höher hervorsteht als der Klebstoff (26, 26').

6. Fügebauteil nach einem der Ansprüche 1 bis 5, wobei der zweite Bereich (30) den ersten Bereich (28) zumindest teilweise umgibt.

7. Fügebauteil nach einem der Ansprüche 1 bis 5, wobei der erste Bereich (28') den zweiten Bereich (30') zumindest teilweise umgibt.

8. Fügebauteil nach einem der Ansprüche 1 bis 7, wobei die Oberseite (18) des Flansches (16) eine Vertiefung (32, 32') aufweist, und wobei die Vertiefung (32,32') zumindest einen Teil des ersten Bereichs (28, 28') bildet, der von dem Lotmaterial (24, 24') überdeckt wird.

9. Fügebauteil nach Anspruch 8, wobei die Vertiefung (32) im Zentrum der Oberseite (18) des Flansches (16) angeordnet ist.

10. Fügebauteil nach einem der Ansprüche 1 bis 9, wobei die Schmelztemperatur des Lotmaterials (24, 24') niedriger oder gleich der Vernetzungstemperatur des Klebstoffes (26, 26') ist.

11. Fügebauteil nach einem der Ansprüche 1 bis 10, wobei die Schmelztemperatur des Lotmaterials (24, 24') im Bereich von 100°C bis 250°C liegt, vorzugsweise im Bereich von 150°C bis 220°C.

12. Fügebauteil nach einem der Ansprüche 1 bis 11, wobei das Lotmaterial (24, 24') ein bleiloses Weichlot ist, welches ein Flussmittel aufweist.

13. Fügebauteil nach einem der Ansprüche 1 bis 12, wobei an oder in dem Schaft (14) ein Gewinde (44) angeordnet ist.

14. Fügebauteil nach einem der Anspruche 1 bis 13, wobei an dem Schaft (14) eine Schneidklemme (46) angeordnet ist.

15. Fügeverfahren mit den Schritten:
- Bereitstellen eines Fügebauteils (10) mit einem Schaft (14) und einem quer dazu verlaufenden Flansch (16), wobei der Flansch (16) eine von dem Schaft (14) abgewandte Oberseite (18) aufweist, wobei ein erster Bereich (28, 28') der Oberseite (18) mit einem vorapplizierten Lotmaterial (24, 24') bedeckt ist und ein zweiter Bereich (30, 30') der Oberseite (18) mit einem vorapplizierten Klebstoff (26, 26') bedeckt ist;
- Bereitstellen eines Werkstücks (34) mit zumindest einem elektrisch leitenden Bereich (36);
- Positionieren des Fügebauteils (10) auf dem Werkstück (34) derart, dass das Lotmaterial (24, 24') den elektrisch leitenden Bereich (36) kontaktiert; und
- Fügen des Fügebauteils (10) auf das Werkstück (34) durch Erhitzen des Klebstoffs (26, 26'), wobei zur Herstellung einer elektrisch leitenden Verbindung zwischen Fügebauteil (10) und Werkstück (34) gleichzeitig das Lotmaterial (24, 24') geschmolzen wird.

## Revendications

1. Composant d'assemblage (10) présentant une tige (14) et une bride (16) qui s'étend transversalement par rapport à la tige (14), dans lequel la bride (16) comprend une surface supérieure (18) qui est éloignée de la tige (14), dans lequel une première région (28, 28') de la surface supérieure (18) est couverte par un matériau de brasage préappliqué (24, 24') et une seconde région (30, 30') de la surface supérieure (18) est couverte par un adhésif préappliqué (26, 26').

2. Composant d'assemblage selon la revendication 1, dans lequel le composant d'assemblage (10) est un clou, dans lequel la tige (14) s'étend le long d'un axe central (12) et la bride (16) s'étend perpendiculairement à l'axe central (12).

3. Composant d'assemblage selon la revendication 1 ou 2, dans lequel la première région (28, 28') jouxte la seconde région (30, 30').

4. Composant d'assemblage selon l'une des revendications 1 à 3, dans lequel au moins une partie du matériau de brasage (24, 24') n'est pas couverte par l'adhésif (26, 26').

5. Composant d'assemblage selon l'une des revendications 1 à 4, dans lequel le matériau de brasage (24, 24') lorsqu'il est vu depuis la surface supérieure (18) de la bride (16) le long de l'axe central (12) du composant d'assemblage (10), fait saillie plus haut que l'adhésif (26, 26').

6. Composant d'assemblage selon l'une des revendications 1 à 5, dans lequel la seconde région (30) entoure au moins partiellement la première région (28).

7. Composant d'assemblage selon l'une des revendications 1 à 5, dans lequel la première région (28') entoure au moins partiellement la seconde région (30').

8. Composant d'assemblage selon l'une des revendications 1 à 7, dans lequel la surface supérieure (18) de la bride (16) comprend un évidement (32, 32') et dans lequel l'évidement (32, 32') forme au moins une partie de la première région (28, 28') qui est couverte par le matériau de brasage (24, 24').

9. Composant d'assemblage selon la revendication 8, dans lequel l'évidement (32) est agencé dans le centre de la surface supérieure (18) de la bride (16).

10. Composant d'assemblage selon l'une des revendications 1 à 9, dans lequel la température de fusion du matériau de brasage (24, 24') est inférieure ou égale à la température de durcissement de l'adhésif (26, 26').

11. Composant d'assemblage selon l'une des revendications 1 à 10, dans lequel la température de fusion du matériau de brasage (24, 24') est dans une plage entre 100 °C et 250 °C, de préférence dans une plage entre 150 °C et 220 °C.

12. Composant d'assemblage selon l'une des revendications 1 à 11, dans lequel le matériau de brasage (24, 24') est un brasage tendre sans plomb qui comprend un agent de flux.

13. Composant d'assemblage selon l'une des revendications 1 à 12, dans lequel un filet (44) est agencé sur ou dans la tige (14).

14. Composant d'assemblage selon l'une des revendications 1 à 13, dans lequel un connecteur de déplacement d'isolation (46) est agencé sur la tige (14).

15. Procédé d'assemblage présentant les étapes :
- la fourniture d'un composant d'assemblage (10) avec une tige (14) et une bride (16) qui s'étend transversalement par rapport à la tige (14), dans lequel la bride (16) comprend une surface supérieure (18) qui est éloignée de la tige (14), dans lequel une première région (28, 28') de la surface supérieure (18) est couverte par un matériau de brasage préappliqué (24, 24') et une seconde région (30, 30') de la surface supérieure (18) est couverte par un adhésif préappliqué (26, 26') ;
- la fourniture d'une pièce à usiner (34) avec au moins une région électroconductrice (36) ;
- le positionnement du composant d'assemblage (10) sur la pièce de travail (34) de telle manière que le matériau de brasage (24, 24') touche la région électroconductrice (36) ; et
- l'assemblage du composant d'assemblage (10) sur la pièce à usiner (34) suite au chauffage de l'adhésif (26, 26'), dans lequel le matériau de brasage (24, 24') est fondu au même moment pour produire une connexion électroconductrice entre le composant d'assemblage (10) et la pièce à usiner (34).
